# EUROPEAN PATENT APPLICATION

(11) **EP 2 290 113 A1**
(43) Date of publication of application: **02.03.2011**
(21) Application number: 09762573.5
(22) Date of filing: 11.06.2009
(51) Int. Cl.: C22B 7/00, B09B 3/00, C22B 23/00, C22B 34/22, C22B 34/34

(54) **PROCESS FOR RECOVERYING VALUABLE METALS FROM WASTE CATALYST**

(30) Priority: 12.06.2008 JP 2008154194
(71) Applicant: JFE Mineral Company, Ltd., Minato-ku Tokyo 105-0014 (JP); Tohoku University, Aoba-ku Sendai-shi Miyagi 980-8577 (JP)
(72) Inventor: SHIOKAWA, Takahiro, Tokyo 105-0014 (JP); SUGINOBE, Hidetaka, Tokyo 105-0014 (JP); SAITO, Fumio, Sendai-shi Miyagi 980-8577 (JP); KANO, Junya, Sendai-shi Miyagi 980-8577 (JP)
(74) Representative: HOFFMANN EITLE
(86) International application number: PCT/JP2009/061063
(87) International publication number: WO 2009/151147

(57) **Abstract**

A method for recovering high purity nickel, cobalt, molybdenum and vanadium from a waste catalyst in high yield by convenient means is provided. The method includes a step of heating a waste catalyst containing valuable metals in a non-oxidizing atmosphere, thereby deoiling an adhered oil content by thermal decomposition, a step of co-milling the deoiled waste catalyst and a chloride to form a chloride of nickel and/or cobalt, a step of water-leaching the co-milled waste catalyst to dissolve nickel and/or cobalt in water, a step of oxidizing leaching residue containing molybdenum and/or vanadium after water leaching to form an oxide or molybdenum and/or vanadium; and a step of subjecting the leaching residue containing the oxide of molybdenum and/or vanadium to alkali leaching to dissolve the molybdenum and/or vanadium in an alkali solution.

## Description

### Technical Field

The present invention relates to a method for recovering a valuable metal from a waste catalyst containing expensive nickel, cobalt, molybdenum and vanadium called valuable metals.

### Background Art

Catalysts comprising a porous carrier comprising alumina or alumina having added thereto a small amount of silica, and molybdenum, cobalt, nickel or the like supported on the carrier are commonly used in a catalytic hydrogenation desulfurization process or a direct desulfurization process of heavy oil in petroleum refining equipment. By using a catalyst in the desulfurization process, heavy metals such as vanadium and nickel contained in heavy oil are accumulated in a catalyst, and a surface of the catalyst (that is, holes of a carrier) is covered with sulfur, nitrogen, heavy oil and the like. As a result, activity of the catalyst is gradually deteriorated. A catalyst used in direct desulfurization of heavy oil loses its activity in 1 to 2 years, and a catalyst used in indirect desulfurization loses its activity in 7 to 8 years. Those catalysts are disposed of.

The surface of the catalyst that has lost its activity and has been disposed of (hereinafter referred to as a "waste catalyst") is covered with a heavy oil-derived tarry organic material. Furthermore, the waste catalyst contains heavy oil-derived vanadium and nickel in high concentration, other than the previously supported molybdenum, cobalt and nickel. Those metals are rare valuable metals called rare metal, and are used in various applications. For example, nickel is widely used as a raw material of special steel, stainless steel, a catalyst, a secondary battery and the like, cobalt is widely used as a raw material of special steel, a catalyst, a rechargeable battery and the like, molybdenum is widely used as a raw material of special steel, a catalyst and an electric resistor, and vanadium is widely used as a raw material of special steel, a catalyst and a special storage battery.

Rare metals such as molybdenum, cobalt, nickel and vanadium are that the amount thereof contained in natural ore is small, and its price is high. For this reason, the rare metal is called a valuable metal. Meanwhile, a waste catalyst contains large amounts of molybdenum, cobalt, nickel and vanadium as compared with natural ore. In view of this, various technologies for recovering a valuable metal from a waste catalyst are investigated.

For example, Patent Document 1 discloses the technology of removing an oil content from a waste catalyst (hereinafter referred to as "deoiling"), oxidative-roasting the waste catalyst, and alkali-leaching molybdenum and vanadium in an alkali solution of pH 10 to 12, and then acid-leaching nickel and cobalt in an acid solution of pH 1 to 3. However, this technology is that alumina as a carrier of a catalyst forms a composite oxide with nickel and cobalt by oxidative roasting, and due to this, recovery of nickel and cobalt by acid leaching becomes difficult. In other words, this method is that carbon content remained after deoiling self-combusts in the roasting process, and therefore it is difficult to perform oxidative-roasting at low material temperature in an industrial scale. For this reason, an insoluble nickel-aluminum composite oxide is formed by roasting, and this gave rise to the problem on cost due to decrease in recovery rate that leaching rate of nickel is low.

Patent Document 2 discloses the technology of roasting a waste catalyst and an alkali to form sodium salts of molybdenum and vanadium, water-leaching molybdenum and vanadium in hot water, magnetically decomposing its residue to separate a nickel-aluminum composite oxide having magnetic property, concentrating the composite oxide, and reutilizing the same as a material of ferronickel. However, this technology requires alkali roasting at high temperature for a long period of time (900 to 1,000°C, 8 to 10 hr) in order to obtain a composite oxide enabling magnetic separation, and this leads to decrease in productivity. Furthermore, concentration rate of the nickel-aluminum composite oxide is less than 2 times. As a result, a large amount of waste materials (such as alumina) is generated in a production process of ferronickel.

Patent Document 3 discloses the technology of deoiling a waste catalyst, oxidative-roasting the waste catalyst, dissolving the waste catalyst using sulfuric acid and a metal reducing agent, and solvent extracting molybdenum and vanadium from the dissolved liquid with a solvent to recover those, and on the other hand, recovering nickel and cobalt contained in the residual liquid as sulfides, and adsorbing slight amounts of nickel and cobalt in the residual liquid on an ion-exchange resin. However, in this technology, not only molybdenum, vanadium, nickel and cobalt, but alumina as a carrier of the waste catalyst is dissolved. Therefore, this technology requires a large amount of sulfuric acid and a metal reducing agent. Furthermore, impurities (such as alumina) are incorporated into the recovered molybdenum, vanadium, nickel and cobalt, and this requires complicated processes in order to increase purity.

Patent Document 4 discloses the technology of deoiling a waste catalyst, recovering chlorides of vanadium and molybdenum as vapor, distilling the chlorides under pressure to sublimate aluminum chloride (carrier origin) and iron chloride (impurity origin), thereby refining vanadium and molybdenum, and eluting cobalt chloride and nickel chloride remained in the waste catalyst in hot water. However, this technology uses toxic chlorine gas in an atmosphere of high temperature and high pressure, and this leads to the problem relating to safety. Furthermore, aluminum chloride and iron chloride are incorporated when recovering molybdenum chloride and vanadium chloride, and this requires complicated processes in order to separate molybdenum and vanadium.

Patent Document 5 discloses the technology of conducting deoiling and oxidative roasting by introducing a waste catalyst in a moving bed furnace to oxidize molybdenum, and then heating molybdenum oxide in a non-oxidizing atmosphere, and at the same time, reducing vanadium, cobalt and nickel, and recovering the sublimated molybdenum with a bug filter. However, this technology not only requires a process of reducing molybdenum oxide obtained, but requires a complicated process for refining valuable metals because vanadium, cobalt and nickel are recovered as an alloy.

### Prior Art References

Patent Document 1: JP-A 5-156375 (1993)
Patent Document 2: JP-A 2006-328440
Patent Document 3: JP-A 6-248367 (1994)
Patent Document 4: JP-A 54-107801 (1979)
Patent Document 5: JP-A 2005-272917

### Summary of the Invention

### Problems that the Invention is to Solve

The present invention has an object to provide a method for recovering high purity valuable metals in high yield by convenient means, by separating nickel and cobalt from a waste catalyst and recovering those, and then further recovering molybdenum and vanadium.

In recovering valuable metals (that is, expensive nickel, cobalt, molybdenum and vanadium) from a waste catalyst, a process of deoiling a waste catalyst and further conducting oxidative roasting or alkali roasting, thereby obtaining an oxide or an alkali salt has conventionally be required. However, in the process, nickel and cobalt form their composite oxides with alumina as a carrier of the waste catalyst, and this incurs decrease in yield of nickel and cobalt.

Furthermore, when valuable metals are recovered using a chemical agent (such as an acid and chlorine gas), alumina as a carrier of a waste catalyst is reacted with the chemical agent to consume the chemical agent. Therefore, not only a large amount of the chemical agent is required, but an aluminum compound is incorporated as an impurity into valuable metals. As a result, a process or refining valuable metals is necessary. Furthermore, when valuable metals are sublimated or reduced at high temperature, valuable metals are recovered as an alloy. Therefore, a process of separating valuable metals from the alloy and refining the same is necessary.

### Means for Solving the Problems

To solve the above problems, the present invention has the following characteristics.
(1) A method for recovering a valuable metal from a waste catalyst, comprising a deoiling step of a waste catalyst containing valuable metals, a co-milling step of a mixture of the waste catalyst after the deoiling step and a chloride, a water leaching step of a reaction product obtained by the co-milling step, an oxidation step of a leaching residue obtained by the water leaching step, and an alkali leaching step of a reaction product obtained by the oxidation step.
(2) The method for recovering a valuable metal from a waste catalyst as described in (1), wherein the valuable metal chlorinated in the co-milling step is nickel and/or cobalt, and the valuable metal oxidized in the oxidation step is molybdenum and/or vanadium.
(3) The method for recovering a valuable metal from a waste catalyst as described in (1) or (2), wherein the chloride is copper chloride.
(4) The method for recovering a valuable metal from a waste catalyst as described in (1) or (2), wherein the deoiling step includes a step of heating the waste catalyst in a non-oxidizing atmosphere, thereby removing an adhered oil content by thermal decomposition.
(5) A method for recovering at least one of nickel, cobalt, molybdenum and vanadium from a waste catalyst containing valuable metals, comprising:
   a step of heating the waste catalyst in a non-oxidizing atmosphere, thereby deoiling a deposited oil content by thermal decomposition, and a step of co-milling the deoiled waste catalyst and a chloride to form a chloride of nickel and/or cobalt;
   a step of water-leaching the co-milled waste catalyst to dissolve nickel and/or cobalt in water;
   a step of oxidizing leaching residue containing molybdenum and/or vanadium after water leaching to form an oxide of molybdenum and/or vanadium; and
   a step of subjecting the leaching residue containing the oxide of molybdenum and/or vanadium to alkali leaching to dissolve the Molybdenum and/or vanadium in an alkali solution.

### Advantage of the Invention

According to the present invention, nickel and cobalt in a waste catalyst are recovered as chlorides by water leaching, and molybdenum and vanadium are then oxidation treated and recovered as their oxides by alkali leaching. As a result, high purity nickel, cobalt, molybdenum and vanadium can be recovered in high yield without forming composite oxides with alumina (carrier origin), that had been the problem in the conventional technology.

### Brief Description of the Drawing

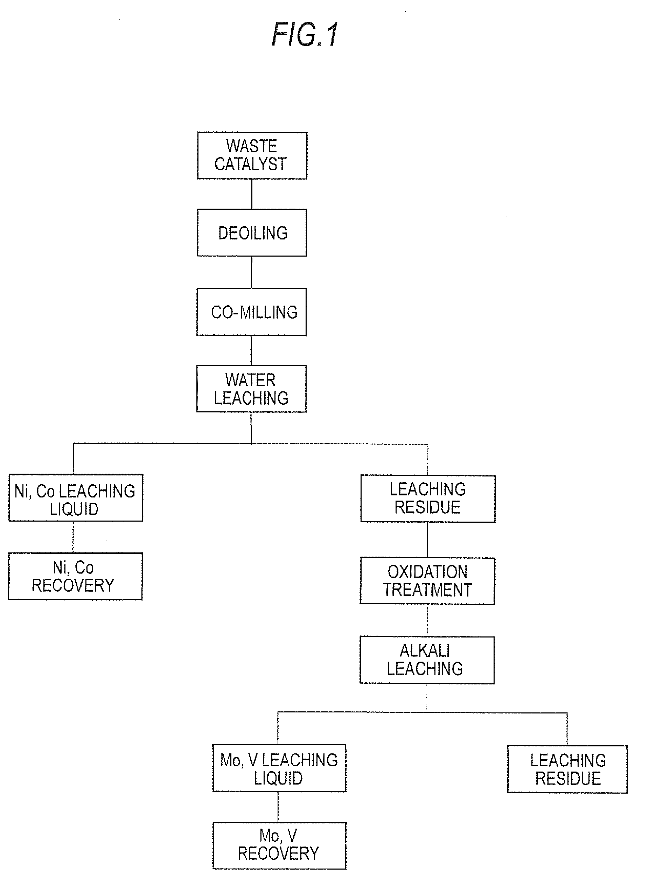

Fig. 1 is a flow diagram showing the steps of the present invention.

### Mode for Carrying Out the Invention

In recovering valuable metals from a waste catalyst containing various valuable metals, in the present invention, attention has been given to chemical reaction characteristics of plural valuable metals contained in the waste catalyst and alumina as a carrier of a catalyst, and the valuable metals have been selectively recovered.

Specifically, attention has been given to the fact that when a waste catalyst and a chloride are co-milled, only nickel and cobalt among plural valuable metals contained in the waste catalyst are chlorinated (alumina as a carrier is not chlorinated in the co-milling). The chlorinated nickel and cobalt can be recovered by a water leaching treatment. On the other hand, molybdenum and vanadium that are not chlorinated are converted into oxides and then can be recovered by an alkali leaching treatment.

The present inventors have made extensive investigations on the technology of deoiling a waste catalyst in a non-oxidizing atmosphere, converting nickel and cobalt into their chlorides by a co-milling method without using a chlorine gas, and dissolving the chlorides in water (hereinafter referred to as "water leaching,"). They have further made the investigation on the technology of dissolving molybdenum and vanadium contained in a residue (hereinafter referred to as "leaching residue") after the water leaching of the nickel chlorides and the cobalt chlorides, in an alkali solution (hereinafter referred to as "alkali leaching."). As a result, it has been revealed that high purity nickel, cobalt, molybdenum and vanadium can be recovered in high yield without dissolving alumina as a carrier of a waste catalyst.

Specifically, by mixing and milling a waste catalyst deoiled in a non-oxidizing atmosphere and a chloride (hereinafter referred to as "co-milling"), active surfaces of nickel, cobalt and the chloride are exposed, and nickel chloride and cobalt chloride are formed by contacting the surfaces with each other. Therefore, chlorides of nickel and cobalt can be obtained without using a chlorine gas. This reaction proceeds by the contact of the activated surfaces. Therefore, by giving sufficient time to the co-milling, all of nickel and cobalt contained in a waste catalyst can be converted into chlorides.

On the other hand, chlorides of molybdenum and vanadium are chemically unstable, and those chlorides are not formed in the co-milling. Therefore, in recovering molybdenum and vanadium, water leaching cannot be applied, and alkali leaching is conducted. Furthermore, alumina as a carrier is chemically stable, and therefore, its chloride is not formed in the co-milling.

It became clear from the above points that when nickel and cobalt are recovered from a waste catalyst containing nickel chloride and cobalt chloride formed by co-milling by water leaching, and molybdenum and vanadium are then recovered from the resulting leaching residue containing molybdenum oxide and vanadium oxide formed by oxidation treatment of the leaching residue by alkali leaching, high purity valuable metals can be recovered in high yield by convenient means.

Fig. 1 is a flow diagram showing the steps of the present invention. The steps of the present invention are described below by reference to Fig. 1. The waste catalyst used herein is a catalyst used in petroleum refining equipment (for example, a heavy oil desulfurization catalyst or a hydrogenation catalyst) from which activity has been lost, and molybdenum, nickel and cobalt are supported on a carrier comprising alumina or alumina and a small amount of silica added thereto.

Vanadium and nickel separated from petroleum are adhered to the surface.

The waste catalyst containing nickel, cobalt, molybdenum and vanadium used in petroleum refining equipment is subjected to deoiling in order to remove oil content. Where the deviling step is conducted in an oxidizing atmosphere, nickel and cobalt are oxidized, thereby forming a composite oxide with alumina as a carrier. This poses a problem for the subsequent separation step of nickel and cobalt. Therefore, the deoiling is conducted by heating the waste catalyst in a non-oxidizing atmosphere and thermally decomposing oil content adhered to the surface thereof.

The waste catalyst having been subjected to deoiling is mixed with a chloride and co-milled. Nickel and cobalt are contained in a form of a sulfide in the waste catalyst, and are converted into nickel chloride and cobalt chloride by the co-milling. Chlorides of molybdenum and vanadium are not formed in this cho-milling

Nickel chloride and cobalt chloride are dissolved in a liquid from the co-milled waste catalyst by water leaching. On the other hand, oxidation treatment is applied to the leaching residue separated by filtration to form oxides of molybdenum and vanadium.

Molybdenum oxide and vanadium oxide are dissolved in an alkali solution by alkali leaching from the leaching residue to which oxidation treatment has been applied.

Nickel, cobalt, molybdenum and vanadium are recovered through such steps, respectively.

Deoiling, co-milling, water leaching, oxidation treatment and alkali leaching shown in Fig. 1 are described in detail below.

### Deoiling:

The deoiling is a treatment of heating a waste catalyst in a non-oxidizing atmosphere and thermally decomposing an oil content in order to remove the oil content adhered to the surface of the waste catalyst. Due to the heating in a non-oxidizing atmosphere, nickel, cobalt, molybdenum and vanadium are not oxidized, and complex oxides with alumina (carrier origin) are not formed. Component of an atmosphere gas is not particularly limited, but an inert gas that does not cause oxidation of nickel, cobalt, molybdenum and vanadium (for example, nitrogen gas or argon gas) is preferred.

Where the heating temperature of the deoiling is lower than 300°C, thermal decomposition of heavy oil is difficult, and where the heating temperature exceeds 1,000°C, a fuel is excessively consumed, and there is a problem from the standpoint of energy saving. Therefore, the heating temperature is preferably in a range of from 300 to 1,000°C. Where the heating time is shorter than 0.5 hour, thermal decomposition does not sufficiently proceed, and where the heating time exceeds 5 hours, a fuel is excessively consumed, and there is a problem from the standpoint of energy saving. Therefore, the heating time is preferably in a range of from 0.5 to 5 hours. Carbon formed by the heating of the waste catalyst is utilized as a milling aid in conducting co-milling. Co-milling:

The co-milling is a step of milling a mixture comprising two kinds or more of compounds and/or pure materials. If impact force applied to minute faces among mixtures that collided exceeds a certain threshold necessary for a chemical reaction at the time of the co-milling, mechanochemical reaction can cause on the collision faces. A product formed by one collision is a slight amount. However, when the co-milling is continued, reaction occurs on further new minute faces, and consequently, almost the total amount of the mixture can cause chemical reaction.

In the present invention, nickel chloride and cobalt chloride are formed by mixing and co-milling a waste catalyst to which deoiling was applied, and a chloride. The chloride to be subjected to the co-milling is not particularly limited. A chloride capable of forming nickel chloride and cobalt chloride by reacting with nickel sulfide and cobalt sulfide by the contact of active surfaces appeared by co-milling with each other is selected and used. The reaction is represented by the following chemical formula. The reaction formula is an exemplification of the case of a chloride of an arbitrary monovalent metal element (M).

NiS+2MCl→NiCl₂+M₂S

CoS+2MCl→CoCl₂+M₂S

The chloride mixed with the waste catalyst selects a chloride such that both chloride and sulfide as reaction products are thermodynamically stable. Examples of the chloride include CuCl₂, AsCl₃, SbCl₃, BiCl₃, GaCl₃, HgCl₂, PdCl₂ PtCl₂, RhCl₃, IrCl₃, MoCl₄, WCl₄, TaCl₄ ZrCl₄ and TiCl₄. According to the inventors' studies, CuCl₂ (copper chloride) is preferred. Where a particle diameter is too coarse, much time is required for a reaction. Therefore, not a flake shape but a granular shape is preferred.

Mill used in the co-milling is not particularly limited. However, collision energy between the waste catalyst and the chloride must be increased to make the above reaction proceed in a short period of time. Therefore, a mill capable of giving acceleration of several G or more (for example, vibration mill or planetary mill) is preferred. Sulfide formed by the co-milling is oxidized with an oxidation treatment, subjected to the conventional wet treatment, and then recovered.

### Water leaching:

The water leaching is a treatment of dissolving nickel chloride and cobalt chloride as reaction products of co-milling in water. Leaching residue after water leaching of nickel chloride and cobalt chloride is separated by filtration. Temperature of water used in the water leaching is not particularly limited. However, the temperature is preferably in a range of from 30 to 50°C suitable for dissolution of a chloride. Nickel and cobalt dissolved in water by the water leaching are subjected to the conventional wet treatment and then recovered.

### Oxidation treatment:

The oxidation treatment is a treatment of oxidizing molybdenum sulfide and vanadium sulfide in the leaching residue into molybdenum oxide and vanadium oxide by oxidizing the leaching residue separated by filtration after the water leaching. The reaction is represented by the following chemical formula.

2MoS₂+7O₂→2MoO₃+4SO₂

4V₃S₄+31-O₂→6V₂O₅+16SO₂

Means for conducting the oxidation treatment is not particularly limited, and means capable of sufficiently oxidizing molybdenum sulfide and vanadium sulfide in the leaching residue are selected. For example, a roasting oxidation treatment performing roasting in an oxidizing atmosphere, a wet oxidation treatment using a liquid oxidizing agent (for example, hydrogen peroxide or hydrochlorous acid), a milling oxidation treatment by co-milling with a powder oxidizing agent (such as manganese dioxide or sodium chlorate), and the like are preferred.

### Alkali leaching:

The alkali leaching is a treatment of dissolving molybdenum oxide and vanadium oxide as reaction products formed by the oxidation treatment in an alkali solution. The leaching residue after alkali leaching of molybdenum oxide and vanadium oxide is separated by filtration. Component of the alkali solution used in the alkali leaching is preferably an aqueous solution of sodium hydroxide, sodium carbonate, ammonia and the like. pH is preferably in a range of from 10 to 12.

Temperature of the alkali solution is not particularly limited. However, a temperature of 50°C or higher suitable for dissolution of an oxide is preferred. Molybdenum and vanadium dissolved in water by the water leaching are subjected to the conventional wet treatment and then recovered.

The leaching residue after alkali leaching and separation by filtration is that the component is alumina (carrier origin), and therefore can be reutilized as a roadbed material and the like.

### Examples

Contents of Mo, V, Ni, Co, Al and Cu contained in a waste catalyst discarded from petroleum refining plants are shown in Table 1. The waste catalyst was heated in a non-oxidizing atmosphere to thermally decompose an oil content adhered to the surface thereof, thereby conducting deoiling. The deoiling was conducted such that the waste catalyst was charged in a quartz glass tubular furnace, and heated (500°C, 4 hours) while flowing a nitrogen gas therethrough. Contents of Mo, V, Ni, Co, Al and Cu contained in the waste catalyst after the deoiling are shown in Table 1.

**Table 1**

| | Content (mass%) | | | | | | |
|---|---|---|---|---|---|---|---|
| | Mo | V | Ni | Co | Al | Cu | Oil + Water |
| Waste catalyst | 7.9 | 5.6 | 4.3 | 1.7 | 22.1 | - | 20.3 |
| Deviled waste catalyst | 9.7 | 7.3 | 5.7 | 1.9 | 27.6 | - | - |
| Reaction product after cho-milling | 7.4 | 5.6 | 4.37 | 1.46 | 21.1 | 9.5 | - |
| Water-extraction residue | 9.4 | 7.1 | 0.3 | 0.1 | 26.9 | 12.0 | - |
| Alkali-leaching residue | 0.34 | 0.31 | 0.39 | 0.15 | 32.10 | 14.37 | - |
| Ammonia-leaching residue | 0.41 | 0.36 | 0.45 | 0.17 | 37.30 | 0.51 | - |

3.17 g of deoiled granular waste catalyst with a size of 1 to 3 mm and 0. 83 g of anhydrous copper chloride were mixed, the resulting mixture was introduced into a stainless steel pot of a planetary ball mill, and co-milling was conducted. Mixing ratio of the waste catalyst to anhydrous copper chloride was set such that the mole number of copper is about 1.5 times the mole number of nickel and cobalt contained in the waste catalyst. Volume of the stainless steel pot was 45 ml, and 7 stainless steel balls (diameter: 15 mm) as a milling medium were placed in the stainless steel pot. The stainless steel pot was mounted on a planetary ball mill, and co-milling was conducted at the number of revolutions of 700 per minute for 4 hours. After completion of the co-milling, the stainless steel pot was removed, and the milled product was recovered.

10 g of the milled product was introduced into 100 ml of distilled water, and water leaching was conducted for hour. The liquid was filtered with a reduced pressure filtering machine to obtain an aqueous solution having nickel and cobalt dissolved therein. The conventional wet treatment was applied to the aqueous solution, and nickel and cobalt were recovered. Contents of Mo, V, Ni, Co, Al and Cu contained in the leaching residue separated by filtration are shown in Table 1.

On the other hand, the leaching residue obtained by water leaching and separation by filtration was washed with 100 ml of hot water, and heated in an oxidative roasting furnace (450 to 500°C, 4 hours), thereby conducting oxidative roasting. The leaching residue was introduced into an alkali solution or pH 11 obtained by adding sodium hydroxide to 100 ml of hot water, and alkali leaching was conducted for 1 hour. The alkali solution was filtered with a reduced pressure filtering machine to obtain an alkali solution having molybdenum and vanadium dissolved therein. The conventional wet treatment was applied to the alkali solution, and molybdenum and vanadium were recovered. Contents of Mo, V, Ni, Co, Al and Cu contained in the waste residue separated by filtration are shown in Table 1.

The waste residue after alkali leaching and separation by filtration was washed with 100 ml of hot water, and then introduced into 100 ml of ammonia water of pH 11, and ammonia leaching was conducted for 1 hour. The liquid was filtered with a reduced pressure filtering machine. The conventional wet treatment was applied to the liquid, and copper was recovered. The waste residue separated by filtration was washed with 100 ml of hot water, and dried for one day and night with a drier.

Thus, nickel, cobalt, molybdenum and vanadium were recovered from the waste catalyst. The yields are shown in Table 2.

**Table 2**

| | Mo | V | Ni | Co |
|---|---|---|---|---|
| Field (%) | 96.9 | 96.3 | 94.8 | 94.0 |

As shown in Table 2, nickel, cobalt, molybdenum and vanadium were recovered in high yields.

### Industrial Applicability

According to the present invention, valuable metals such as nickel, cobalt, molybdenum and vanadium can conveniently be recovered from a waste catalyst in high yields. Therefore, industrial applicability of the present invention is extremely high.

## Claims

1. A method for recovering a valuable metal from a waste catalyst, comprising:
a deoiling step of a waste catalyst containing valuable metals;
a co-milling step of a mixture of the waste catalyst after the deoiling step and a chloride;
a water leaching step of a reaction product obtained by the co-milling step;
an oxidation step of a leaching residue obtained by the water leaching step, and
an alkali leaching step of a reaction product obtained by the oxidation step.

2. The method for recovering a valuable metal from a waste catalyst as claimed in claim 1, wherein the valuable metal chlorinated in the co-milling step is nickel and/or cobalt, and the valuable metal oxidized in the oxidation step is molybdenum and/or vanadium.

3. The method for recovering a valuable metal from a waste catalyst as claimed in claim 1 or 2, wherein the chloride is copper chloride.

4. The method for recovering a valuable metal from a waste catalyst as claimed in claim 1 or 2, wherein the deoiling step includes a step of heating the waste catalyst in a non-oxidizing atmosphere, thereby removing an adhered oil content by thermal decomposition.

5. A method for recovering at least one of nickel, cobalt, molybdenum and vanadium from a waste catalyst containing valuable metals, comprising:
a step of heating the waste catalyst in a non-oxidizing atmosphere, thereby deoiling an adhered oil content by thermal decomposition;
a step of co-milling the deoiled waste catalyst and a chloride to form a chloride of nickel and/or cobalt;
a step of water-leaching the co-milled waste catalyst to dissolve nickel and/or cobalt in water;
a step of oxidizing leaching residue containing molybdenum and/or vanadium after water leaching to form an oxide of molybdenum and/or vanadium; and
a step of subjecting the leaching residue containing the oxide of molybdenum and/or vanadium to alkali leaching to dissolve the molybdenum and/or vanadium in an alkali solution.
